# EUROPEAN PATENT APPLICATION

(11) **EP 3 640 563 A1**
(43) Date of publication of application: **22.04.2020**
(21) Application number: 18817353.8
(22) Date of filing: 20.03.2018
(51) Int. Cl.: F24H 1/16, F24H 1/20, F24H 9/20, F24H 9/02, F24H 9/00

(54) **ELECTRIC WATER HEATER HAVING INSTANTANEOUS HOT WATER STORAGE-TYPE STRUCTURE**

(30) Priority: 16.06.2017 KR 20170076724
(71) Applicant: Choi, Young-Hwan, Seoul 04359 (KR)
(72) Inventor: Choi, Young-Hwan, Seoul 04359 (KR)
(74) Representative: Verscht, Thomas Kurt Albert
(86) International application number: PCT/KR2018/003229
(87) International publication number: WO 2018/230817

(57) **Abstract**

The present invention relates to an electric water heater having an instantaneous hot water storage-type structure, which does not have to directly heat water accommodated inside a housing so as to enable a large amount of hot water to be instantaneously and continuously supplied. The present invention produces the hot water while the water having flowed into the housing through an inlet part passes through the first and second heat exchange pipes, and thus does not have to directly heat the large amount of water accommodated inside the housing so as to enable the large amount of hot water to be instantaneously supplied.

## Description

### Technical Field

The present invention relates to an electric water heater having an instantaneous hot water storage-type structure and, more specifically, the present invention relates to an electric water heater having an instantaneous hot water storage-type structure allowing to provide instantaneous, continuous flow of a large amount of hot water, without having to heat the water accommodated inside a housing directly.

### Background Art

Most water heaters currently on the market have a mainstream storage type that continuously stores and uses a certain amount of water with a tank. Such storage-type water heaters have to heat the water stored in the water tank continually, thereby causing a problem in that both the water consumed and the energy used for heating the water is wasted.

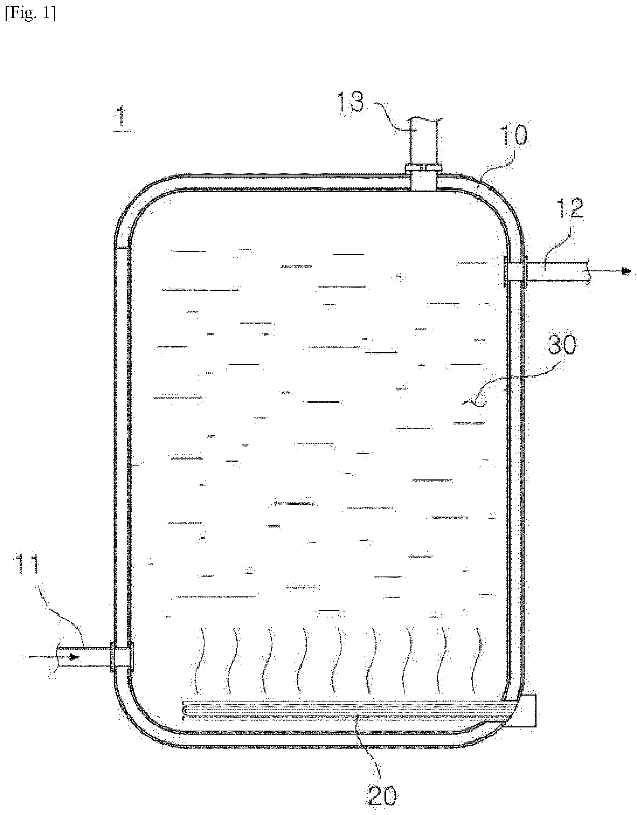

FIG. 1 is a view illustrating a conventional electric water heater. Referring to FIG. 1, the conventional electric water heater 1 includes a storage tank 10 in which water is accommodated, a heater 20 provided in the lower portion of the storage tank 10, a water supply pipe 11 provided on a lower portion side of the storage tank 10, and a hot water providing unit 12 provided on an upper portion side of the storage tank 10. Water supplied into the storage tank 10 through the water supply pipe 11 is directly heated by the heater 20, and then the water is provided to users through the hot water providing unit 12.

However, the conventional electric water heater 1 is a direct heating-type water heater, in which the heater 20 directly heats a large amount of water stored in the storage tank 10 and then supplies hot water to the users. Thus, there is a problem in that heating stored water takes a long time.

In addition, as outside cold water flows into the storage tank, a temperature of the hot water stored in the storage tank is lowered, causing a problem in that the temperature of outflowing hot water is decreased as well. In addition, since new water is continually supplied to the storage tank, lime and iron dissolved in the water accumulate in the storage tank and the heater, thereby seriously contaminating the inside of the storage tank and degrading heat exchange performance of the heater.

### Disclosure

### Technical Problem

An objective of the present invention, for solving the problems of the related art as described above, is to provide an electric water heater having an instantaneous storage-type structure that allows providing a large amount of hot water instantaneously without having to directly heat the water accommodated in a housing of the electric water heater.

### Technical Solution

In order to achieve the objective of the present Invention, there is an electric water heater having an instantaneous hot water storage-type structure. The electric water heater includes: a housing having a space to accommodate water therein, an inlet part being provided at one side of the space, and an outlet part being provided at the other side of the space; a first heat exchange pipe disposed at one side of an inside of the housing; a second heat exchange pipe disposed at the other side of the inside of the housing; a heater that applies heat to the first heat exchange pipe or the second heat exchange pipe; and a connection member having a first connection pipe connecting the inlet part to the first heat exchange pipe, a second connection pipe connecting the first heat exchange pipe to the second heat exchange pipe, and a third connection pipe connecting the second heat exchange pipe to the outlet part.

In addition, the first heat exchange pipe and the second heat exchange pipe may be respectively provided to be wound in a coil shape, and the heater may be positioned in a center of the second heat exchange pipe.

In addition, the first heat exchange pipe may be positioned at an upper side of the inside of the housing, the second heat exchange pipe may be positioned at a lower side of the inside of the housing, and the heater may apply heat to the second heat exchange pipe.

In addition, the electric water heater may further include a separating partition provided between the first heat exchange pipe and the second heat exchange pipe, wherein the heater may be provided at a lower portion of the separating partition.

In addition, the separating partition may be provided to cover an outer periphery of the second heat exchange pipe, and a flow of the water heated by heat exchange with the heater or the second heat exchange pipe, which is a portion of the water provided in an inside of the housing, may be blocked by the separating partition.

In addition, the separating partition may include: a pair of sidewalls protruding from a bottom of the inside of the housing to an upper portion thereof, with the second heat exchange pipe and the heater provided therebetween; and an upper wall integrally connecting upper ends of the pair of the sidewalls to each other.

In addition, the first heat exchange pipe may be configured in plural, and the connection member may further include a sub connection pipe connecting a pair of adjacent first heat exchange pipes to each other.

In addition, the housing may include an inner housing provided with the space and an outer housing covering an outer side of the inner housing, and each of the inlet part and the outlet part may be positioned in the space while passing through the outer housing and the inner housing.

In addition, the electric water heater may further include: a connection pipe in which one side thereof is connected to the inlet part or the first connection pipe and the other side thereof is connected to the outlet part or the third connection pipe; a temperature measuring sensor provided in the outlet part and measuring a temperature of the water passing through the outlet part; and a mixing valve installed in the connection pipe to open or close the connection pipe, wherein when the temperature of the water measured by the temperature measuring sensor is above a predetermined temperature, the mixing valve is opened so that the water supplied through the inlet part is allowed to be mixed with the water in the third connection pipe or the outlet part through the connection pipe.

In addition, the electric water heater may further include a water supply member for controlling a level of the water accommodated in the housing to be kept constant.

In addition, the water supply member may include: a float installed to move up or down by buoyancy of water accommodated in the housing; a float switch for controlling the supply of water on the basis of a position of the float; and a supply pipe for supplying the water to the float switch.

### Advantageous Effects

In the present invention, since the first and second heat exchange pipes are provided in and inside a housing, the water flowed into the housing is heated while passing through the first and second heat exchange pipes. Therefore, there is an effect that a large amount of hot water is continuously, instantaneously provided without having to heat a large amount of water accommodated in the housing directly.

In addition, since a temperature of the water flowed to a second heat exchange pipe is doubly raised by a heater and a separating partition, there is an effect that the temperature of the water flowing out through the second heat exchange pipe to an outlet part reaches a high temperature of 40° C or higher.

In addition, since the outside cold water does not flow into the housing, there is an effect that the temperature of the water accommodated in the housing is not rapidly decreased. Furthermore, the inside of the housing is not contaminated by foreign matter or the like since the water accommodated in the housing does not need periodic replacement.

In addition, because of the double structure housing, it is easy to block the heat escaping to the outside to effectively increase the heat insulation and durability.

### Description of Drawings

FIG. 1 is a view illustrating a conventional electric water heater.
FIG. 2 is a view schematically illustrating an electric water heater having an instantaneous hot water storage-type structure according to a preferred embodiment of the present invention, and FIG. 3 is a view schematically illustrating an inside of the electric water heater having the instantaneous hot water storage-type structure according to the preferred embodiment of the present invention.
FIG. 4 is a view illustrating a connection member of the electric water heater having the instantaneous hot water storage-type structure according to the preferred embodiment of the present invention.
FIG. 5 is a view illustrating for explaining an operation of the electric water heater having the instantaneous hot water storage-type structure according to the preferred embodiment of the present invention.
FIG. 6 is a view schematically illustrating a state in which a first heat exchange pipe of the electric water heater having the instantaneous hot water storage-type structure according to the preferred embodiment of the present invention is configured in plural.

### <Description of the main numerals in the drawings>

100, 102: Electric water heater
110: Housing 110a: Inner housing
110b: Outer housing 112: Space
114: Inlet part 116: Outlet part
118: Drain part 120: First heat exchange pipe
122: First heat exchange pipe 130: Second heat exchange pipe
140: Heater 150: Connection member
152: First connection pipe 153: Sub connection pipe
154: Second connection pipe 156: Third connection pipe
160: Separating partition 162: Sidewall
164: Upper wall 170: Water supply member
172: Float 174: Float switch
176: Supply pipe

### Best Mode

Hereinafter, with reference to the accompanying drawings, an electric water heater having an instantaneous hot water storage-type structure according to a preferred embodiment of the present invention will be described in detail.

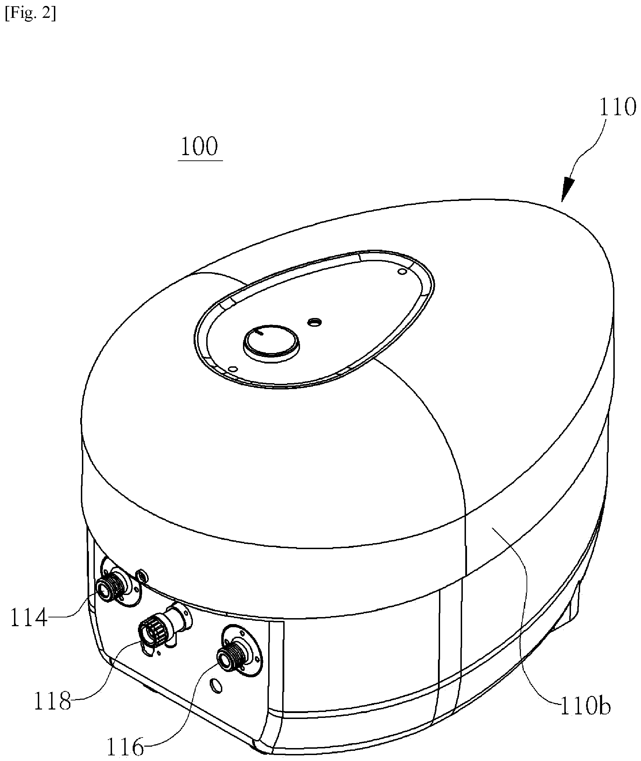

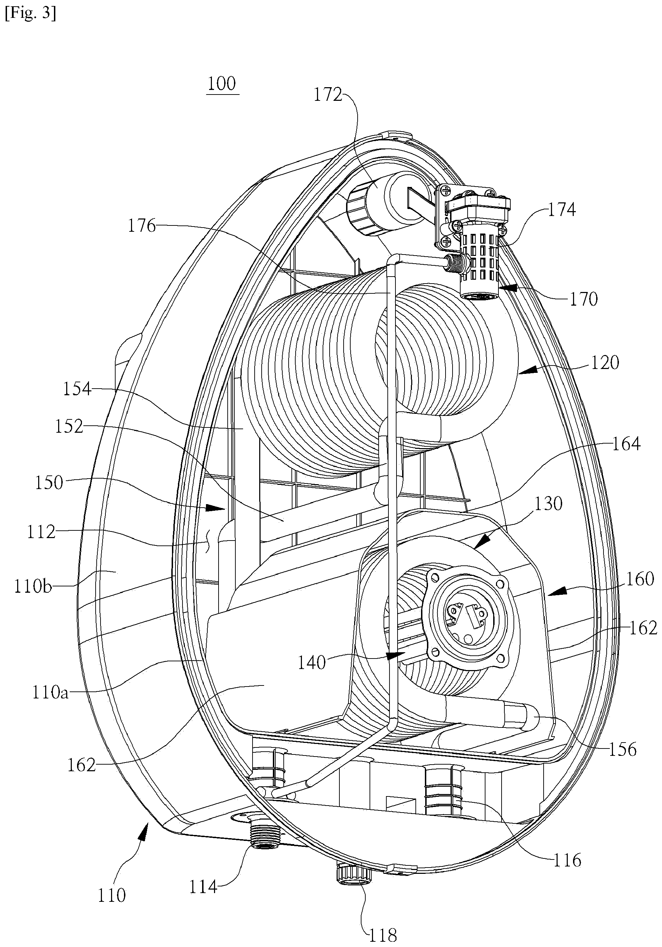

FIG. 2 is a view schematically illustrating the electric water heater having the instantaneous hot water storage-type structure according to the preferred embodiment of the present invention, and FIG. 3 is a view schematically illustrating an inside of the electric water heater having the instantaneous water heater storage-type structure according to the preferred embodiment of the present invention.

Referring to FIGS. 2 and 3, the electric water heater 100 having the instantaneous hot water storage-type structure according to the preferred embodiment of the present invention may include a housing 110, a first heat exchange pipe 120, a second heat exchange pipe 130, a heater 140, and a connection member 150. Also, the electric water heater may further include a separating partition 160 and a water supply member 170.

The housing 110 is provided with a space 112 so that water is accommodated therein. The housing 110 has a double structure, specifically: an inner housing 110a that provides the space 112 and an outer housing 110b that covers an outer side of the inner housing 110a. As such, when the housing 110 is configured to have the double structure, it is easy to block heat escaping to the outside so as to effectively increase heat insulation and durability thereof. An inlet part 114 and an outlet part 116 are respectively provided at one side and the other side of a lower side of the housing 110, and a drain part 118 is positioned between the inlet part 114 and the outlet part 116. Each of the inlet part 114, the outlet part 116, and the drain part 118 is positioned in the space 112 while passing through the outer housing 110b and the inner housing 110a. The inlet part 114 is configured to allow outside water to be supplied, and the outlet part 116 is configured to allow hot water passing through the second heat exchange pipe 130, which is to be described later, to be provided to the outside of the housing 110. The drain part 118 is configured to drain the water accommodated in the space 112 to the outside.

The first heat exchange pipe 120 may be positioned at an upper side in the space 112, and the second heat exchange pipe 130 may be positioned at a lower side in the space 112 so as to be spaced apart from a lower portion of the first heat exchange pipe 120. The first and second heat exchange pipes 120 and 130 are provided such that the pipes are wound in, for example, a coil shape. The coil shape increases heat exchange efficiency by widening an area of heat exchange contacting with water accommodated in the space 112.

The heater 140 applies heat to the first heat exchange pipe 120 or the second heat exchange pipe 130, and is configured to generate heat from, for example, electricity. The heater 140 may be, for example, positioned at a center of the second heat exchange pipe 130 to supply heat to the second heat exchange pipe 130. In addition, a temperature measuring sensor (not shown) is provided in a third connection pipe 156 or the outlet part 116, and a power switch (not shown), which turns on and off power of the heater 140 on the basis of a temperature measured by the temperature measuring sensor, may be further provided.

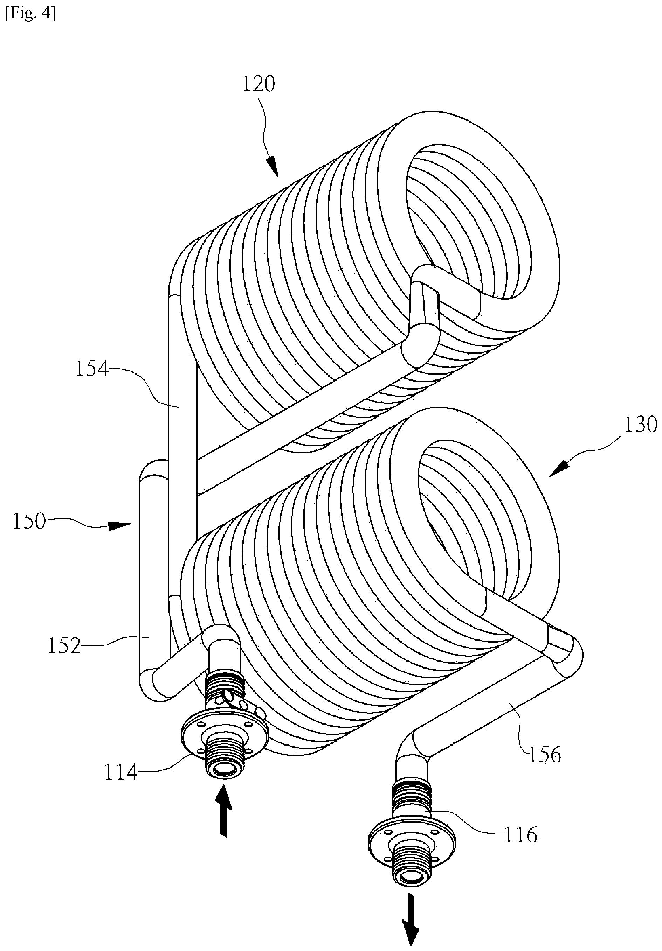

The connection member 150 will be described in FIG. 4.

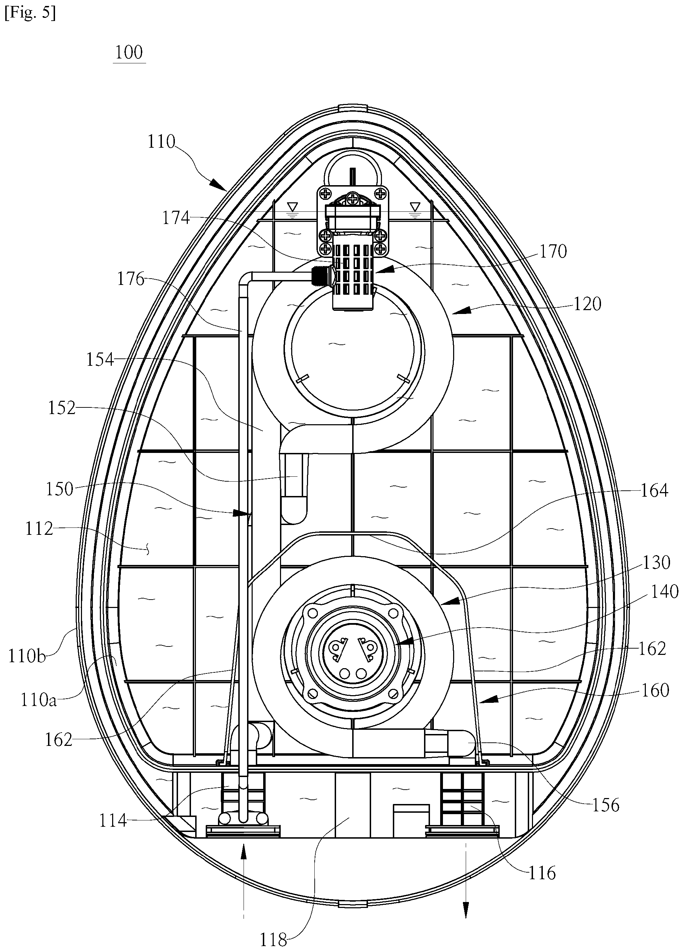

The separating partition 160 is provided between the first heat exchange pipe 120 and the second heat exchange pipe 130 and is configured to cover an outer periphery of the second heat exchange pipe 130. The separating partition 160 includes a pair of sidewalls 162 protruding from a bottom of the inside of the inner housing 110a to an upper portion thereof, with the second heat exchange pipe 130 and the heater 140 provided therebetween; and an upper wall 164 integrally connecting upper ends of the pair of the sidewalls 162 to each other. The sidewall 162 and the upper wall 164 are provided in a plate shape, and the second heat exchange pipe 130 and the heater 140 are provided in a space formed by the sidewall 162 and the upper wall 164. Accordingly, a flow of hot water heated by heat exchange with the heater 140 or the second heat exchange pipe 130, which is the water accommodated in the space 112 of the housing 110, is blocked by the separating partition 160. Thus a temperature of the water located at the lower portion of the separating partition 160 is configured to be higher than the temperature of the water located around the first heat exchange pipe 120. This will be described again in FIG. 5.

The water supply member 170 controls a level of the water accommodated in the space 112 of the housing 110 to be kept constant. For example, the water supply member 170 may include: a float 172 installed to move up or down on the basis of the level of the water accommodated in the space 112; a float switch 174 that is hinge-coupled to the float 172 and adjusts a supply of water on the basis of a position of the float 172; and a supply pipe 176 for supplying water to the float switch 174. The float 172 is configured to float on a surface of the water accommodated in the space 112 by buoyancy of water. The supply pipe 176 is connected to the inlet part 114 and supplies the water flowing into the housing 110 to the float switch 174. The float switch 174 blocks the water of the supply pipe 176 from being supplied to the space 112 when the float 172 rises above a predetermined height of the space 112, whereas the water of the supply pipe 176 is supplied to the space 112 when the float 172 falls below the predetermined height of the space 112. As such, the level of water accommodated in the space 112 by the water supply member 170 is kept constant.

FIG. 4 is a view illustrating the connection member of the electric water heater having the instantaneous hot water storage-type structure according to the preferred embodiment of the present invention, and FIG. 5 is a view illustrating an operation of the electric water heater having the instantaneous hot water storage-type structure according to the preferred embodiment of the present invention.

Referring to FIGS. 4 and 5, the connection member 150 may include: a first connection pipe 152 connecting the inlet part 114 to the first heat exchange pipe 120; a second connection pipe 154 connecting the first heat exchange pipe 120 to the second heat exchange pipe 130; and the third connection pipe 156 connecting the second heat exchange pipe 130 to the outlet part 116.

In addition, the outside water supplied into the housing 110 through the inlet part 114, that is, direct water, such as tap water, is moved to the first heat exchange pipe 120 through the first connection pipe 152. At this moment, the water is accommodated in the space 112 of the housing 110, and the water in the space 112 is configured to have a temperature higher than the direct water by the heater 140. Accordingly, the water moved to the first heat exchange pipe 120 undergoes heat exchange with the water accommodated in the space 112 of the housing 110, and in the first place, the temperature thereof is increased.

Subsequently, the water moved along the first heat exchange pipe 120 is moved to the second heat exchange pipe 130 through the second connection pipe 154. Since the second heat exchange pipe 130 is provided with the heater 140, the water moved to the second heat exchange pipe 130 undergoes heat exchange with the heater 140, and in the second place, the temperature thereof is increased. At this time, since the separating partition 160 is provided on an outer side of the second heat exchange pipe 130, the flow of hot water heated by heat exchange with the heater 140 or the second heat exchange pipe 130, which is the water accommodated in the housing 110, is blocked by the separating partition 160. Accordingly, the heat of the hot water generated between the separating partition 160 and the second heat exchange pipe 130 does not transmit to an upper portion of the housing 110, and heat exchange is performed with the second heat exchange pipe 130. Thus, in the third place, the temperature of the water moving along the second heat exchange pipe 130 is increased.

As such, the temperature of the water moved to the second heat exchange pipe 130 is doubly increased by the heater 140 and the separating partition 160, and thus there is an effect that the temperature of the water flowing out from the outlet part 116 through the second heat exchange pipe 130 reaches a high temperature of 40° C or more.

In addition, the water supplied into the housing 110 through the inlet part 114 is heated as hot water while passing through the first and second heat exchange pipes 120 and 130. Therefore, there is an effect that a large amount of hot water is continuously, instantaneously provided without having to heat a large amount of water accommodated in the housing directly.

In addition, since the outside cold water does not flow into the housing, there is an effect that the temperature of the water accommodated in the housing is not rapidly reduced, and the water accommodated in the housing does not need periodic replacement. Therefore, the inside of the housing is not contaminated by foreign matter or the like.

Meanwhile, the present invention may further include: a connection pipe (not shown) in which one side thereof is connected to the inlet part 114 or the first connection pipe 152 and the other side thereof is connected to the outlet part 116 or the third connection pipe 156; a temperature measuring sensor (not shown) provided in the outlet part 116 and measuring a temperature of water passing through the outlet part 116; and a mixing valve (not shown) installed in the connection pipe to open or close the connection pipe. In addition, when the temperature of the water measured by the temperature measuring sensor is above a predetermined temperature, that is, the temperature is high enough that the users may not use hot water, the mixing valve may be opened so that the cold water supplied through the inlet part 114 is allowed to be mixed with the water in the third connector 156 or the outlet part 116.

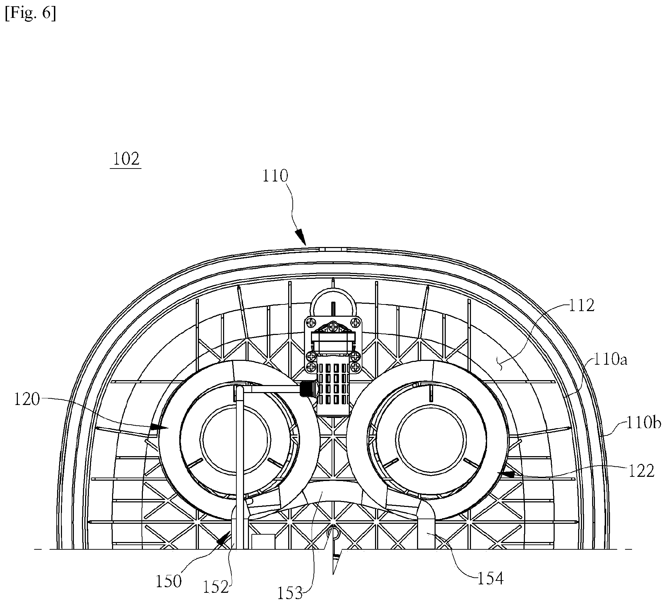

FIG. 6 is a view schematically illustrating a state in which the first heat exchange pipe of the electric water heater having the instantaneous hot water storage-type structure according to the preferred embodiment of the present invention is configured in plural.

Referring to FIGS. 5 and 6, the electric water heater 102 having the instantaneous hot water storage-type structure according to the preferred embodiment of the present invention may be provided with the first heat exchange pipes 120 and 122 in plural in order to further increase an efficiency of heat exchange of the first and second heat exchange pipes 120 and 122 on the basis of an internal size of the housing 110 and the like. In this case, the connection member 150 may further include a sub connection pipe 153 which interconnects a pair of the adjacent first heat exchange pipes 120 and 122 to each other.

Although the present invention has been described in detail in the above embodiment, it is obvious that the present invention is not limited thereto. It is apparent that those skilled in the art will appreciate that various modifications and variations are possible within the scope of the present invention. If such variations and modifications fall within the scope of the appended claims, their technical spirit should also be regarded as belonging to the present invention.

## Claims

1. An electric water heater having an instantaneous hot water storage-type structure, the electric water heater comprising:
a housing having a space to accommodate water therein, an inlet part being provided at one side of the space, and an outlet part being provided at the other side of the space;
a first heat exchange pipe disposed at one side of an inside of the housing;
a second heat exchange pipe disposed at the other side of the inside of the housing;
a heater that applies heat to the first heat exchange pipe or the second heat exchange pipe; and
a connection member having a first connection pipe connecting the inlet part to the first heat exchange pipe, a second connection pipe connecting the first heat exchange pipe to the second heat exchange pipe, and a third connection pipe connecting the second heat exchange pipe to the outlet part.

2. The electric water heater having an instantaneous hot water storage-type structure of claim 1, wherein
the first heat exchange pipe and the second heat exchange pipe are respectively provided to be wound in a coil shape, and
the heater is positioned in a center of the second heat exchange pipe.

3. The electric water heater having an instantaneous hot water storage-type structure of claim 1, wherein
the first heat exchange pipe is positioned at an upper side of the inside of the housing,
the second heat exchange pipe is positioned at a lower side of the inside of the housing, and
the heater applies heat to the second heat exchange pipe.

4. The electric water heater having an instantaneous hot water storage-type structure of claim 3, further comprising:
a separating partition provided between the first heat exchange pipe and the second heat exchange pipe, wherein the heater is provided at a lower portion of the separating partition.

5. The electric water heater having an instantaneous hot water storage-type structure of claim 4, wherein
the separating partition is provided to cover an outer periphery of the second heat exchange pipe, and
a flow of the water heated by heat exchange with the heater or the second heat exchange pipe, which is a portion of the water provided in an inside of the housing, is blocked by the separating partition.

6. The electric water heater having an instantaneous hot water storage-type structure of claim 5, wherein the separating partition comprises:
a pair of sidewalls protruding from a bottom of the inside of the housing to an upper portion thereof, with the second heat exchange pipe and the heater provided therebetween; and
an upper wall integrally connecting upper ends of the pair of the sidewalls to each other.

7. The electric water heater having an instantaneous hot water storage-type structure of claim 3, wherein
the first heat exchange pipe is configured in plural, and
the connection member further comprises a sub connection pipe connecting a pair of adjacent first heat exchange pipes to each other.

8. The electric water heater having an instantaneous hot water storage-type structure of claim 1, wherein
the housing comprises an inner housing provided with the space and an outer housing covering an outer side of the inner housing, and
each of the inlet part and the outlet part is positioned in the space while passing through the outer housing and the inner housing.

9. The electric water heater having an instantaneous hot water storage-type structure of claim 1, further comprising:
a connection pipe in which one side thereof is connected to the inlet part or the first connection pipe and the other side thereof is connected to the outlet part or the third connection pipe;
a temperature measuring sensor provided in the outlet part and measuring a temperature of the water passing through the outlet part; and
a mixing valve installed in the connection pipe to open or close the connection pipe, wherein
when the temperature of the water measured by the temperature measuring sensor is above a predetermined temperature, the mixing valve is opened so that the water supplied through the inlet part is allowed to be mixed with the water in the third connection pipe or the outlet part through the connection pipe.

10. The electric water heater having an instantaneous hot water storage-type structure of claim 1, further comprising:
a water supply member for controlling a level of the water accommodated in the housing to be kept constant.

11. The electric water heater having an instantaneous hot water storage-type structure of claim 1, wherein a water supply member comprises:
a float installed to move up or down by buoyancy of water accommodated in the housing;
a float switch for controlling the supply of water on the basis of a position of the float; and
a supply pipe for supplying the water to the float switch.
